Europäisches Patentamt

European Patent Office

Office européen des brevets

(19)

(11) Publication number: 0 325 390
A1

## (12) EUROPEAN PATENT APPLICATION

(21) Application number: 89300359.0

(22) Date of filing: 16.01.89

(51) Int. Cl.4: **B 60 T 8/30**

(30) Priority: 21.01.88 GB 8801361

(43) Date of publication of application:
26.07.89 Bulletin 89/30

(84) Designated Contracting States: DE ES FR GB IT

(71) Applicant: AUTOMOTIVE PRODUCTS PLC
Tachbrook Road
Leamington Spa Warwickshire CV31 3ER (GB)

(72) Inventor: Antrobus, Philip Michael
2 Grain Mill House The Maltings Lillington Avenue
Leamington Spa Warwicks. CV32 5FF (GB)

(74) Representative: Cundy, Anthony Brian et al
Anthony Cundy & Company 384 Station Road Dorridge
Solihull West Midlands B93 8ES (GB)

(54) Vehicle antilock braking systems.

(57) A vehicle antilock braking system has a master cylinder (20) which will produce a source of high presssure fluid upon brake actuation, said master cylinder (20) is connected to a brake circuit including two brake actuators (11, 17), each actuator (11, 17) being associated with a different wheel of the vehicle, control means (18, 19, 31, 23) is associated with one of the wheels for sensing a change in velocity of that wheel and reducing the pressure of fluid in the brake circuit when wheel deceleration increases above a first predetermined value and a proportioning valve (34) which at a predetermined pressure in the brake circuit will increase the ratio of the rates at which pressure is increased to the actuators (11, 17) associated with said one and the other wheel respectively, means is provided to control the proportioning valve (34) to reduce the pressure applied to the actuator (17) associated with said other wheel in proportion to the pressure applied by the master cylinder (20), when said other wheel locks or is liable to lock.

FIG 1

Description

## VEHICLE ANTILOCK BRAKING SYSTEMS

The invention relates to vehicle antilock braking systems.

Hitherto, dual circuit braking systems have been proposed in which each circuit controls one front wheel and the diagonally opposite rear wheel. With such systems, wheel speed sensors may be provided on each of the front wheels to control brake pressure modulation means to reduce the pressure of fluid in the circuit serving that front wheel and the associated rear wheel, in response to deceleration of the front wheel. Locking of the associated rear wheel of such systems is avoided by applying a greater percentage of the braking effort through the front wheels. This may be achieved by means of a proportioning valve which is reactive to pressure in the brake circuit to reduce the rate at which pressure is applied to the rear brakes, once the pressure in the circuit rises above a predetermined value. The predetermined value at which the proportioning valve reduces the rate at which pressure is applied to the rear brakes may be adjustable, for example in response to axle load.

In order to prevent excessive underbraking of the rear wheels in such systems, the predetermined pressure and rate of increase of pressure to the rear brakes may be set such that it will just prevent the rear wheels locking, when the front and rear brakes are operating with their friction linings at the design frictional coefficients. However, should the frictional coefficients of the friction linings vary significantly due, for example, to fade of the front friction linings, the rear wheels will be liable to lock. The risk may be reduced by reducing the pressure at which the proportioning valve begins to reduce the rate of increase in pressure of the rear wheels as well as reducing the rate of increase, but at the cost of excessive underbraking when the front and rear brakes are operating at their design friction lining frictional coefficients.

According to one aspect of the present invention, a vehicle antilock braking system comprises; a master cylinder which will produce a source of high pressure fluid upon brake actuation, said master cylinder being connected to a brake circuit including two brake actuators, each actuator being associated with a different wheel of the vehicle, control means being associated with one of the wheels for sensing a change in the velocity of that wheel and reducing the pressure of fluid in the brake circuit when wheel deceleration increases above a first predetermined value and a proportioning valve which at a predetermined pressure in the brake circuit will increase the ratio of the rates at which pressure is increased to the actuators associated with said one and the other wheel respectively, characterised in that means is provided to control the proportioning valve to reduce the pressure applied to the actuator associated with said other wheel in proportion to the pressure applied by the master cylinder, when said other wheel locks or is liable to lock.

Various embodiments of the invention are now described, by way of example only, with reference to the accompanying drawings, in which:-

Figure 1 is a schematic diagram of an antilock braking system formed in accordance with the invention;

Figure 2 is a diagrammatic illustration of one form of proportioning valve that may be used in the system illustrated in figure 1; and

Figure 3 is a diagrammatic illustration of an alternative form of proportioning valve that may be used in the system illustrated in figure 1.

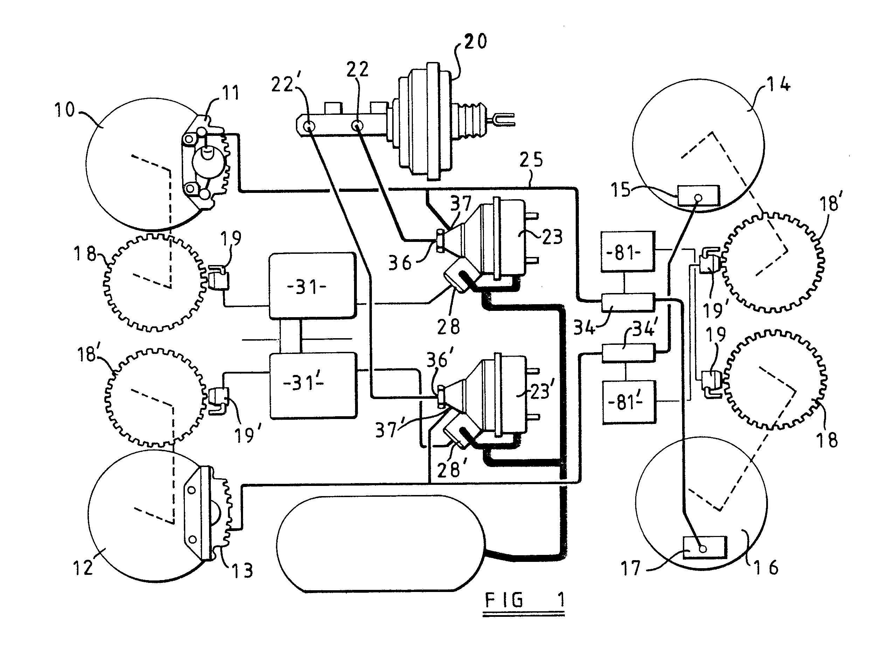

In the system illustrated in figure 1, the front wheels of the vehicle are provided with disk brakes 10 and 12 controlled by actuating calipers 11 and 13 respectively and rear wheels are provided with drum brakes 14 and 16 being controlled by hydraulic cylinders 15 and 17 respectively.

The braking system is a dual system controlled by servo assisted dual master cylinder 20 of conventional design. The master cylinder 20 has two outlets 22 and 22' which provide a source of hydraulic pressure for the two circuits of the dual system, one circuit serving the caliper 11 of the off side front wheel and the cylinder 17 of the near side rear wheel and the other circuit serving the caliper 13 of the near side front wheel and the cylinder 15 of the off side rear wheel.

The two circuits of the system are identical in arrangement and operation, and only one circuit is described in detail below. Similar components have been identified with similar reference numerals.

Outlet 22 of master cylinder 20 is connected to the hydraulic fluid inlet port 36 of an antilock servo pressure modulator 23 of conventional design and outlet port 37 from servo pressure modulator 23 is connected via line 25 to the off side front caliper 11 and near side rear cylinder 17.

The servo pressure modulator 23 comprises a plunger controlled valve which is positioned between the inlet port 36 and outlet port 37, the plunger being slidably sealed within a cylinder on the outlet side of the valve. Movement of the plunger is controlled by a vacuum actuator in which a piston divides a chamber into two fluid tight compartments, one compartment being connected to vacuum and the other being selectively connected to vacuum or atmosphere by means of a solenoid valve 28. The pressure differential across the piston may thus be controlled by means of a solenoid valve 28 to control movement of the piston and hence the plunger. Movement of the plunger away from the plunger controlled valve will first interrupt communication between the master cylinder 20 and, caliper 11 and cylinder 17. Further movement of the plunger in the cylinder will then permit fluid to flow back into the cylinder from the caliper 11 and cylinder 17, thus reducing the braking effort.

A toothed wheel 18 is mounted for rotation with the off side front wheel and an electromagnetic pickup 19 is associated with the toothed wheel 18 to provide a signal which alternates at a frequency proportional to the rotational speed of the off side front wheel. The pickup 19 is connected to an electronic control module 31 which processes the signal therefrom, to provide a measure of the deceleration or acceleration of the off side front wheel. An output is provided from the control module 31 to solenoid valve 28, by means of which the solenoid valve 28 may be energised to connect the chamber of the pressure modulator 23 to atmosphere and thus reduce braking effort applied to caliper 11 and cylinder 17, when deceleration of the off side front wheel rises above a predetermined value, locking of the wheel being liable to occur above this value. The solenoid valve 28 remains energised until acceleration of the off side front wheel rises above a predetermined value, when it will be de-energised and the servo pressure modulator 23 will re-apply normal braking.

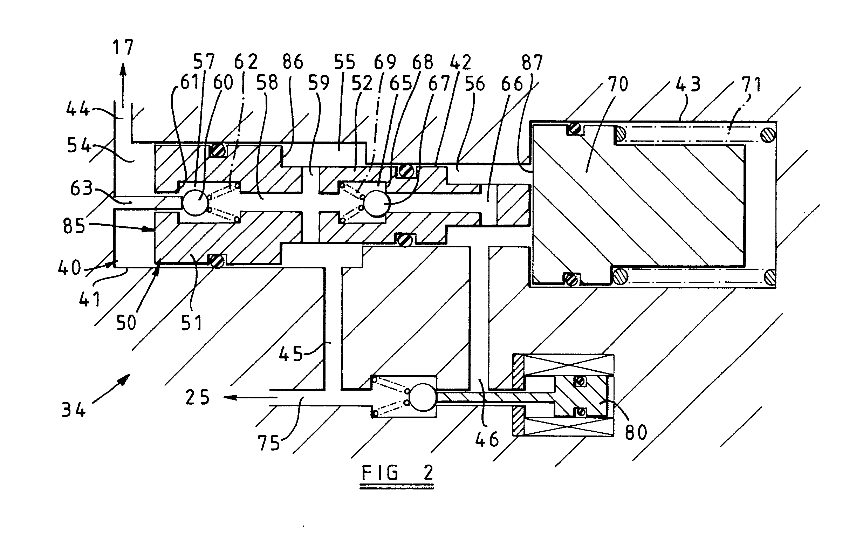

A proportioning valve 34, illustrated in greater detail in figure 2, is provided in the line 25 between the servo pressure modulator 23 and the brake cylinder 17.

The proportioning valve 34 illustrated in figure 2, has a closed stepped cylindrical bore 40 with a first end portion 41, an intermediate portion 42 of reduced diameter and a second end portion 43 of enlarged diameter. An outlet 44 is provided from end portion 41 by which it is connected to brake cylinder 17 and an inlet 45 is provided adjacent the intermediate portion 42. A second inlet 46 is provided to the intermediate portion 42 adjacent end portion 43.

A stepped piston 50 is slidingly located in bore 40, an enlarged diameter end portion 51 being sealed with respect to portion 41 of bore 40 and an intermediate portion 52 of reduced diameter being sealed with respect to the intermediate portion 42 of bore 40. The piston 50 thereby divides the bore 40 into three fluid tight chambers 54, 55 and 56; outlet 44 being connected to chamber 54, inlet 45 being connected to chamber 55 and inlet 46 being connected to chamber 56.

Chambers 54 and 55 are interconnected, via a ball valve 57, by axial bore 58 and radial bore 59. The ball valve 57 comprises a ball 60 which is urged towards chamber 54 and a seat 61 by means of a spring 62. A rod 63 extending from the end of bore 40 and into the axial bore 58, engages the ball 60 and holds the valve 57 open when the piston 50 is hard over to the left as illustrated in figure 2. Chambers 55 and 56 are likewise interconnected, via ball valve 65, by axial bore 58 and radial bore 66. The ball valve 65 comprises a ball 67 which is urged towards chamber 56 and into engagement with seat 68 by means of spring 69.

A further reduced end portion 53 of piston 50 extends from the portion 52 and engages a second piston 70 which is slidingly sealed in portion 43 of bore 40. The piston 70 is resiliently urged towards piston 50 by means of a helical compression spring 71.

The inlets 45 and 46 are interconnected and connected to line 25 of the brake circuit via a port 75. A solenoid valve 80 is positioned between inlets 45 and 46 to control flow of fluid from port 75 to inlet 46.

As shown in figure 1, toothed wheel 18 is mounted for rotation with the near side rear wheel and an electro-magnetic pickup 19 associated with the toothed wheel 18, provides a signal which alternates the frequency proportional to the rotational speed of the wheel, in similar manner to the similar components associated with the off side front wheel. The pickup 19 associated with the near side rear wheel is connected to a control unit 81 which processes the signal from the pickup 19 to provide a measure of deceleration or acceleration of the near side rear wheel and provide an output to energise solenoid 80 when deceleration of the near side rear wheel reaches a second predetermined value above which locking of the wheel is liable to occur. The second predetermined value may be the same as or different than the predetermined value of deceleration which triggers control module 31. Alternatively the control unit 81 may compare the velocity of the near side rear wheel with that of the off side front wheel and provide an output to energise solenoid 80 when the rear wheel is locked or the difference in velocities rises above a predetermined value.

In normal operation, solenoid 80 is de-energised and closes communication between port 75 and inlet 46. When a braking operation commences, fluid is delivered from the master cylinder 22 via servo pressure modulator 23 and line 25 to port 75 and then to chamber 55 via inlet 45. This fluid passes through the radial bore 59 past ball valve 57, which is held open by rod 63, into chamber 54 and from there via outlet 44 to the brake cylinder 17. Initially the pressure in brake cylinder 17 will therefore increase at the same rate as the pressure in caliper 11.

As the pressure in chamber 54 increases, the area differential between the face 85 and the annular face 86 at the shoulder between portions 51 and 52 of piston 50, will cause a force to be exerted on the piston 50 moving it to the right against the load applied to the piston 70 by spring 71. At a predetermined pressure of fluid in chamber 54, which depends upon the spring rate of spring 71, valve 57 will close preventing the passage of further fluid from chamber 55 to 54.

Further increase in pressure in line 25 while ball valve 57 is closed, will cause the piston 50 to move to the left and increase pressure in chamber 54 and the brake cylinder 17, but only at a reduced rate proportional to the ratio of the areas of faces 86 and 85.

Upon release of the brakes or when an antilock operation controlled by a servo pressure modulator 23 is triggered by the sensor 19 associated with the near side front wheel, the excess pressure in chamber 54 will force open the ball valve 57, permitting fluid to flow out of chamber 54 releasing the brake cylinder 17 and allowing the piston 50 to move back to the left under the influence of spring 71.

During normal operation, solenoid valve 80 and ball valve 65 will prevent brake fluid under pressure from entering chamber 56. However, if the sensor 19 associated with the near side rear wheel senses that the wheel has locked or is liable to lock, solenoid valve 80 is energised permitting brake fluid to enter chamber 56. The pressure of fluid in chamber 56 acts against face 87 of piston 70, thus opposing the load applied to the piston by spring 71. Consequently, the force opposing movement of piston 50 due to the imbalance of forces thereon, will be reduced and the piston 50 will move sufficiently to close valve 57 at a lower pressure, this pressure depending on the area of face 87 of piston 70. As the area of face 87 is greater than that of face 86, further increase in brake pressure in line 25 will now cause a further reduction in the effect of spring 71, permitting piston 50 to move further to the right and reducing the pressure applied to the brake cylinder 17. This will continue until the near side rear wheel accelerates sufficiently to overcome its liability to lock, when solenoid valve 80 will close and pressure will be reapplied to cylinder 17 at a slower rate, by movement of the piston to to the left, until the ball valve 57 is opened again by rod 63.

Release of pressure from chamber 56 when the brakes are released or a reduction in pressure results from an antilock operation controlled by servo pressure modulator 23 and triggered by the sensor 19 associated with the off side front wheel, is permitted by ball valve 65.

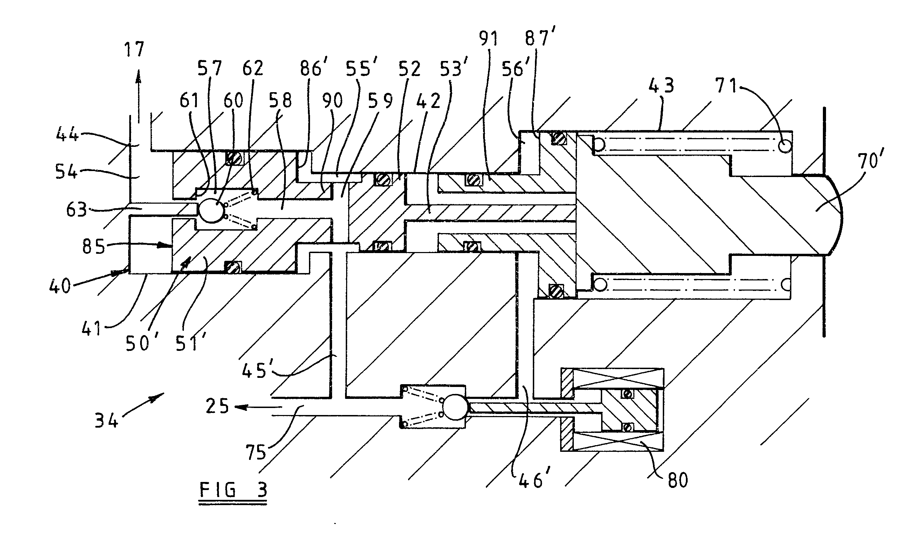

The proportioning valve 34 illustrated in figure 3 comprises a stepped cylindrical bore 40 similar to that disclosed with reference to figure 2, but closed only at the end thereof defined by portion 41. Furthermore, the inlet 45' is connected to intermediate portion 42 and inlet 46' to the end portion 43 of the bore 40. A waisted portion 90 is provided between portions 51' and 52' of piston 50' to define chamber 55'. Chambers 54 and 55' are interconnected by means of axial bore 58, ball valve 57 and radial bore 59 in similar manner to the embodiment illustrated in figure 2.

A further stepped tubular piston 91 is slidingly located and sealed with respect to the intermediate portion 42 and end portion 43 of bore 40, to define fluid tight chamber 56'. Plunger 70' is loaded axially into engagement with the end of piston 91 by means of spring 71 and extends through the end wall of the cylinder 40, so that it may be connected to the axle of the vehicle by a suitable linkage, for example as disclosed in UK Patent Specification Number 1 484 722, by which an additional axial load, proportional to the load applied to the vehicle, may be applied to plunger 71.

End portion 53' of piston 50' extends through the tubular piston 91 and into engagement with plunger the 70'.

The proportioning valve 34 shown in figure 3 functions in the same manner as that described with reference to figure 2. However, the pressure at which the valve 57 closes during normal operation will be varied depending upon the load applied to the vehicle, typically from 37 bars when lightly loaded to 65 when fully loaded.

When the brakes are released or pressure in the line 25 falls due to an antilock operation controlled by servo pressure modulator 23, after brake pressure has been applied to chamber 56', fluid from the chamber 56' will pass back through solenoid valve 80, the excess pressure in chamber 56' unseating the ball even if the solenoid is de-energised.

Various modifications may be made without departing from the invention. For example, while a dual braking system with diagonal split has been described above, the invention will cover single or multi-circuit systems, where the or each proportioning valve may control pressure to one or more brake actuators.

**Claims**

1. A vehicle antilock braking system comprising a master cylinder (20) which will produce a source of high pressure fluid upon brake actuation, said master cylinder (20) being connected to a brake circuit including two brake actuators (11, 17), each actuator (11, 17) being associated with a different wheel of the vehicle, control means (18, 19, 31, 23) being associated with one of the wheels for sensing a change in the velocity of that wheel and reducing the pressure of fluid in the brake circuit when wheel deceleration increases above a first predetermined value and a proportioning valve (34) which at a predetermined pressure in the brake circuit will increase the ratio of the rates at which pressure is increased to the actuators (11, 17) associated with said one and the other wheel respectively, characterised in that means (18, 19, 81) is provided to control the proportioning valve (34) to reduce the pressure applied to the actuator (17) associated with said other wheel in proportion to the pressure applied by the master cylinder (20), when said other wheel locks or is liable to lock.

2. A vehicle antilock braking system according to claim 1 characterised in that said proportioning valve (34) has valve means (57) to control flow of fluid from the master cylinder (20) to the brake actuator (17) associated with said other wheel; a piston (50; 50') to control said valve means (57), said piston (50; 50') having a first face (85) which is subjected to pressure of fluid in the brake actuator (17), a second face (86; 86') which is subjected to pressure of fluid in the brake circuit, and means (71) to apply a load to the piston (50; 50') which will oppose the force applied thereto by fluid pressure applied to said first face (85), said first face (85) being of greater area than the second face (86; 86'), so that when said valve means (57) is open, the excess force acting upon the first face (85) will cause the piston (50; 50') to move against the load applied thereto, until when the pressure reaches a predetermined value, the piston (50; 50') will cause the valve means (57) to close thus interrupting communication betwen the master cylinder (20) and brake actuator (17) associated with said other wheel.

3. A vehicle antilock braking system according to claim 2 characterised in that further increase in pressure of fluid in the brake circuit after the valve means (57) is closed, will cause the piston (50; 50') to move increasing the pressure of fluid applied to the brake actuator (17) but at reduced rate.

4. A vehicle antilock braking system according to claim 2 or 3 characterised in that the load applied to the piston (50') and hence the predetermined pressure at which the valve means (57) closes is adjustable with the load applied to the vehicle.

5. A vehicle antilock braking system according to any one of claims 2 to 4 characterised in that brake pressure is selectively applied to oppose the load applied to the piston (50; 50'), thereby reducing the pressure at which the valve means (57) is closed.

6. A vehicle antilock braking system according to claim 5 characterised in that a solenoid valve (80) controls application of brake pressure to oppose the load applied to the piston (50; 50').

7. A vehicle antilock braking system according to claim 6 characterised in that the solenoid valve (80) is controlled by sensing means (18, 19, 81) associated with the other wheel, said sensing means (18, 19, 81) energising the solenoid valve (80) to permit application of brake pressure, when said other wheel locks or is liable to lock.

8. A vehicle antilock braking system according to any one of claims 5 to 7 characterised in that the means (71) for applying the load to the piston (50; 50') acts upon a second piston (70; 91), brake pressure being selectively applied to a face (87; 87') of the said second piston (70; 91) to oppose the load, the face (87; 87') of said second piston (70; 91) being of greater area than the second face (86; 86') of the first piston (50; 50'), so that once the valve means (57) is closed, further increase in pressure in the brake circuit will cause a reduction in the pressure applied to the brake actuator (17).

9. A vehicle antilock braking system according to any one of the preceding claims characterised in that the proportioning valve (34) comprises; a stepped cylindrical bore (40) having a stepped piston (50; 50') slideably sealed therein, said piston (50; 50') defining a first fluid chamber (54) which is connected to the brake actuator (17) associated with said other wheel and second fluid chamber (55) which is connected to the brake circuit, the first and second fluid chambers (54, 55) being interconnected by a passage (58) through the piston (50; 50'), a valve (57) being provided in the passage (58) between the first and second chambers (54, 55), said valve (57) including a valve member (60) which is biased towards the first chamber (54) and a seat (61) by spring means (62), a rod (63) extending from the first chamber (54) and engaging the valve member (60) to hold the valve (57) open when the stepped piston (50; 50') is displaced towards the first chamber (54), a second piston (70; 91) being slideably sealed within the cylindrical bore (40), means (71) being provided to apply an axial load to urge the second piston (70; 91) towards the stepped piston (50; 50') and to apply an axial load to the stepped piston (50; 50'), a third chamber (56; 56') being defined by said second piston (70; 91), said third chamber (56; 56') being selectively connected to the brake circuit, so that brake pressure may be applied to the second piston (70; 91) to oppose the load applied thereto and thus the load transmitted to the stepped piston (50; 50').

10. A vehicle antilock braking system according to claim 9 characterised in that means (65) is provided for permitting flow of fluid from the third chamber (56) when pressure in the third chamber (56) is in excess of pressure in the brake circuit.

5

FIG 1

FIG 2

EP 0 325 390 A1

FIG 3

EP 0 325 390 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | DE-A-3 403 236 (TEVES)<br>* figures 1-6 *<br>--- | 1 | B 60 T  8/30 |
| A | DE-A-3 403 237 (TEVES)<br>* figures 1,2 *<br>--- | 1 | |
| A | PATENT ABSTRACTS OF JAPAN<br>vol. 9, no. 187 (M401)(1910), 3rd<br>August 1985; & JP - A - 60 53452<br>(AKEBONO BRAKE KOGYO) 27-03-1985<br>--- | 2,3 | |
| A | GB-A-2 111 623 (TEVES)<br>----- | | |
| | | | TECHNICAL FIELDS SEARCHED (Int. Cl.3)<br><br>B 60 T  8/00 |

The present search report has been drawn up for all claims

| Place of search | Date of completion of the search | Examiner |
|---|---|---|
| BERLIN | 07-04-1989 | LUDWIG H J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................
& : member of the same patent family, corresponding
    document

EPO FORM 1503 03.82 (P0401)